# EUROPÄISCHE PATENTSCHRIFT

(11) **EP 3 170 054 B1**
(45) Veröffentlichungstag und Bekanntmachung des Hinweises auf die Patenterteilung: **24.07.2019**
(21) Anmeldenummer: 15767109.0
(22) Anmeldetag: 09.09.2015
(51) Int. Cl.: G05B 19/042, B61L 15/00, B61L 27/00

(54) **SCHIENENFAHRZEUG MIT EINER EREIGNISGESTEUERTEN FÜHRERSTANDANZEIGEVORRICHTUNG**
RAIL VEHICLE HAVING AN EVENT-CONTROLLED DRIVER'S CAB DISPLAY DEVICE
VÉHICULE FERROVIAIRE POURVU D'UN DISPOSITIF DE PRÉSENTATION DE CABINE DE CONDUCTEUR COMMANDÉ SUR ÉVÉNEMENT

(30) Priorität: 12.09.2014 DE 102014218341
(43) Veröffentlichungstag der Anmeldung: 24.05.2017
(73) Patentinhaber: Siemens Mobility GmbH, 81739 München (DE)
(72) Erfinder: LOSKARN, Roland, 91301 Forchheim (DE); PORSCH, Roland, 95469 Speichersdorf (DE)
(86) Internationale Anmeldenummer: PCT/EP2015/070547
(87) Internationale Veröffentlichungsnummer: WO 2016/038063

(56) Entgegenhaltungen:
- DE-A1- 19 934 388
- DE-A1-102006 034 126
- WERNER GEIER: "Das neue Mensch-Maschine Interface der Lokomotive BR 185", EISENBAHN-REVUE INTERNATIONAL, VERLAG MINIREX, LUZERN, CH, Bd. 1999, Nr. 9, 1. Januar 1999 (1999-01-01), Seiten 366-374, XP009091943, ISSN: 1421-2811

## Beschreibung

Die Erfindung betrifft ein Schienenfahrzeug mit einem Satz von Betriebsmittelsubsystemen und einer Führerstandanzeigevorrichtung zur Anzeige von Informationen an den Fahrzeugführer, die zumindest eine zentrale Anzeigeeinheit aufweist.

Durch die ständige Erweiterung von Funktionalitäten im Betrieb von Schienenfahrzeugen nimmt auch der Informationsgehalt zu, welcher dem Triebfahrzeugführer angezeigt wird. Diese Tendenz steht weiteren Anforderungen bezüglich des Aufbaus von Führerständen, die insbesondere aufgrund von aerodynamischen Aspekten immer kleiner gebaut werden, sowie bezüglich der Aufmerksamkeit entgegen, die der Fahrzeugführer der Strecke widmen muss. Der Grund für die Ausstattung von Führerräumen mit einer Vielzahl von Anzeigestationen (auch "HMI-Stationen" genannt) liegt darin, dass für mehrere Betriebsmittelsubsysteme, deren Betrieb auf einer Interaktion mit dem Triebfahrzeugführer basiert, jeweils eine Anzeigestation vorgesehen ist.

Ein Mensch-Maschine-Interface ist als Teil eines Führertisches in "Das neue Mensch-Maschine-Interface der Lokomotive BR 185", Werner Geier, Eisenbahn-Revue 9/1999 beschrieben.

DE 10 2006 034 126 A1 beschreibt eine Mehrzahl von Anzeigeelementen und eine Mehrzahl von Bedienelementen, die zur Steuerung und Darstellung des Betriebszustandes von Betriebseinrichtungen eines Schienenfahrzeugs dienen.

DE 199 34 388 A1 beschreibt ein Videoüberwachungssystem für Schienenwagen. Das Videoüberwachungssystem besteht aus vier Farbkameras, zwei Videosteuermodems, einem Notsprechstellenkoppler, einem digitalen Bildumlaufspeicher und in jedem Leitstand des Schienenwagens angeordneten Monitoren und Bedienfeldern. Die Monitore sind als Farb-LCD-Monitore ausgebildet. Das Bedienfeld und der Monitor eines jeden Leitstandes sind jeweils mit einem Videosteuermodem verbunden, welches wiederum mit dem digitalen Bildumlaufspeicher verbunden ist. Das jeweilige Videosteuermodem übernimmt dabei die ereignisabhängige Schaltung der Videosignale sowie die Übertragung der Videosignale und der Steuersignale über die Wagenkupplungen mehrerer in einem Verband zu einem Zug verbundener Wagen. Damit kann im aufgerüsteten Leitstand jede Kamera aus jedem Wagen zur Anzeige gebracht werden. Ein Notsprechstellenkoppler ist mit dem Videosteuermodem verbunden. Das Videosteuermodem ist in der Lage, im Notfall eine Kamera auf den Monitor zu schalten. Wird in einem Wagen eine Notsprechstelle durch Rufknopf oder Notbremshebel betätigt, so wird ein Bild des Wagens, in dem die Notsprechstelle betätigt wurde, auf den Monitor geschaltet. Die Bildaufschaltung durch Notsprechstelle hat dabei höchste Priorität.

Der Erfindung liegt die Aufgabe zugrunde, ein Schienenfahrzeug bereitzustellen, welches von dem Fahrzeugführer einfach führbar ist.

Hierzu wird vorgeschlagen, dass die Führerstandanzeigevorrichtung eine der Anzeigeeinheit vorgeschaltete Steuereinheit aufweist, die dazu vorgesehen ist, einen auf mehrere Betriebsmittelsubsysteme bezogenen, dynamischen Informationsgehalt für die Anzeigeeinheit zu regulieren, und ein Regulierungsvorgang der Steuereinheit das Prüfen zumindest einer Bedingung und eine Informationsbehandlung in Abhängigkeit eines Prüfergebnisses umfasst, wobei eine Bedingung des Regulierungsvorgangs das Eintreten eines Betriebsereignisses betrifft und die Informationsbehandlung eine Anzeige von Informationen in Abhängigkeit eines Prüfergebnisses, insbesondere des Prüfergebnisses, umfasst. Hierdurch kann eine im Hinblick auf die im Schienenfahrzeug implementierten Funktionalitäten flexible und zielgerichtete Anzeige von Informationen für den Triebfahrzeugführer erreicht werden. Insbesondere kann die Arbeitsbelastung des Triebfahrzeugführers reduziert werden, wobei seine der Strecke gewidmete Aufmerksamkeit erheblich gesteigert werden kann. Außerdem kann eine ergonomische Ausführung der Führerstandanzeigevorrichtung erzielt werden.

Insbesondere kann gegenüber bekannten Lösungen eine vorteilhafte Reduzierung einer Geräteanzahl und der damit verbundenen Verkabelung erreicht werden.

Unter einer "zentralen" Anzeigeeinheit soll eine Anzeigeeinheit verstanden werden, deren Anzeigefläche bezüglich der Breitenrichtung des Schienenfahrzeugs in diesem mittig angeordnet ist.

Die Anzeigefläche ist insbesondere als zusammenhängende Fläche ausgebildet. Diese kann von einer Displayeinheit gebildet sein, die einer zusammenhängenden Geräteeinheit - wie z.B. einem Einbaugerät - entspricht. Alternativ oder zusätzlich kann die Anzeigeeinheit eine Anzeigefläche aufweisen, die von einer Fahrzeugsichtscheibe, insbesondere einer Windschutzscheibe, gebildet ist. In der fachmännischen Sprache ist eine derartige Anzeigefläche auch "Headup-Display" genannt.

Die Breitenrichtung ist relativ zum Gleisbett horizontal und senkrecht zur Längsrichtung des Schienenfahrzeugs ausgerichtet. Die zentrale Anzeigeeinheit ist zweckmäßigerweise auf der Fahrzeugmittelebene angeordnet, welche eine vertikale, in Längsrichtung des Fahrzeugs ausgerichtete und das Fahrzeug in zwei Hälften teilende Ebene ist. Anders formuliert schneidet die Anzeigeeinheit die Fahrzeugmittelebene. Die Anzeigeeinheit befindet sich daher vorteilhaft im zentralen Bereich des Sichtfelds eines in Fahrtrichtung schauenden Triebfahrzeugführers. Die Breitenrichtung ist senkrecht zur Fahrzeugmittelebene ausgerichtet.

Durch die Steuereinheit kann die Anzeige von Informationen an den Triebfahrzeugführer überwiegend mittels der zentralen Anzeigeeinheit erfolgen. Darunter soll verstanden werden, dass zumindest 50%, vorzugsweise zumindest 70% und besonders vorteilhaft zumindest 85% des Informationsflusses, welcher zur Wiedergabe durch die Führerstandanzeigevorrichtung auf diese gerichtet ist, mittels der Anzeigeeinheit angezeigt werden.

Die Steuereinheit ist bezüglich der Richtung eines Informationsflusses, welcher von den Betriebsmittelsubsystemen auf die Anzeigeeinheit hin gerichtet ist, der Anzeigeeinheit "vorgeschaltet".

Unter einem "dynamischen" Informationsgehalt soll erfindungsgemäß ein Informationsgehalt verstanden werden, welcher bezüglich einer Informationsart mit der Zeit veränderlich ist. Er soll demnach insbesondere von einer einzelnen Anzeigegröße, wie z.B. einer Geschwindigkeitsgröße, unterschieden werden, die sich mit der Zeit verändert und deren Anzeige permanent aktualisiert wird. Der Informationsgehalt kann sich aus verschiedenen Informationsarten zusammensetzen, die jeweils unterschiedlichen Betriebsmittelsubsystemen zugeordnet sind, wobei die Zusammensetzung mit der Zeit veränderlich ist.

Unter einem "Regulieren" soll erfindungsgemäß ein Steuern, insbesondere ein Erzeugen und/oder ein Verwalten verstanden werden, welches gemäß zumindest einer vordefinierten Regel erfolgt. Hierzu umfasst zumindest ein Regulierungsvorgang der Steuereinheit zweckmäßigerweise das Prüfen zumindest einer Bedingung und eine Informationsbehandlung - insbesondere eine Informationsanzeige mittels der zentralen Anzeigeeinheit - in Abhängigkeit eines Prüfergebnisses.

Unter einem "Prüfergebnis" soll erfindungsgemäß ein Ergebnis des Prüfens der zumindest einen Bedingung verstanden werden.

Erfindungsgemäß umfasst die Steuereinheit eine Schnittstelleneinrichtung mit einem Satz von Schnittstellen, die jeweils einem unterschiedlichen Betriebsmittelsubsystem zugeordnet sind. Eine oder mehrere Schnittstellen können jeweils von einer physikalischen Anschlussmöglichkeit gebildet sein. Vorteilhaft ist jedoch, wenn zumindest ein überwiegender Anteil, insbesondere die Gesamtheit der Schnittstellen logischen Schnittstellen - auch logische "Ports" genannt - entsprechen.

Vorzugsweise gehören die Betriebsmittelsubsysteme zur Gruppe von Systemen, die von einer Zugsicherung, einer Türeinheit, einer Klimatisierungseinrichtung, einem Fahrgastinformationssystem , einer Videoüberwachungseinheit, einer elektronischen Buchfahrplaneinheit mit Fahrerassistenzfunktion und einer Zug-Boden-Kommunikationseinheit gebildet ist.

Ein "Betriebsereignis" ist insbesondere eine Phase des Betriebes des Schienenfahrzeugs. Hierzu sind vorzugsweise bestimmte Phasen im Voraus definiert. Eine Bedingung des Regulierungsvorgangs betrifft hierbei das Eintreten einer bestimmten Betriebsphase des Schienenfahrzeugs, wie z.B. eines fahrplanmäßigen Haltens an einer Haltestelle, einer Fahrphase, eines Fahrtantritts, einer Anfahrphase einer Haltestelle oder einer Betätigung einer Notruftaste durch einen Fahrgast.

Es wird vorgeschlagen, dass das Betriebsereignis ein Ereignis in der von einem fahrplanmäßigen Halten an einer Haltestelle, einer Fahrphase, einem Fahrtantritt, einer Anfahrphase einer Haltestelle und einer Betätigung einer Notruftaste durch einen Fahrgast gebildeten Gruppe ist.

Dadurch, dass ein Regulierungsvorgang der Steuereinheit das Prüfen zumindest einer Bedingung und eine Informationsbehandlung in Abhängigkeit eines Prüfergebnisses umfasst, wobei eine Bedingung des Regulierungsvorgangs das Eintreten eines Betriebsereignisses betrifft und die Informationsbehandlung eine Anzeige von Informationen in Abhängigkeit eines Prüfergebnisses umfasst, kann vorteilhaft ein dynamischer Informationsgehalt erreicht werden, welcher ereignisgetriggert mittels der Anzeigeeinheit dem Triebfahrzeugführer angezeigt wird. Dem Triebfahrzeugführer kann zu einem bestimmten Zeitpunkt mittels der zentralen Anzeigeeinheit besonders vorteilhaft die Informationen dargestellt werden, die er für seine Bedienung und Arbeit zu diesem Zeitpunkt, insbesondere für die aktuell eingetretene oder bevorstehende Betriebsphase des Schienenfahrzeugs, benötigt.

Die Bedingung, welche das Eintreten eines Betriebsereignisses "betrifft", stellt zweckmäßigerweise eine Bedingung für ein aktuelles Eintreten oder für ein bevorstehendes Eintreten des Betriebsereignisses dar. Die zumindest eine Bedingung kann selbst durch ein Kriterium oder mehrere Kriterien, die insbesondere Betriebsparameter wie eine Position, eine Geschwindigkeit, ein Lichtverhältnis, ein Witterungsparameter, eine Beschleunigung, das Vorhandensein eines bestimmten Steuersignals usw. betreffen, definiert sein.

Ein einfacher und schneller Regulierungsvorgang wird erfindungsgemäß erreicht, indem die Steuereinheit eine Schnittstelle aufweist, über welche sie im Betrieb auf eine Datenbank zugreift, in welcher Betriebsereignissen jeweils zumindest eine subsystembezogene Information zugeordnet ist. Die Datenbank kann zumindest feste, durch den Triebfahrzeugführer nicht änderbare Einträge aufweisen, wobei vorteilhaft ist, wenn zumindest ein Eintrag der Datenbank durch den Triebfahrzeugführer konfigurierbar ist. Die Datenbank ist in einer Speichereinheit des Schienenfahrzeugs gespeichert.

Außerdem kann ein hoher Bedienkomfort für den Triebfahrzeugführer erreicht werden, wenn die Informationsbehandlung die Anzeige einer subsystembezogenen Bedienmaske umfasst. Unter einer "Bedienmaske" soll eine Maske verstanden werden, über welche Befehle und/oder Daten vom Triebfahrzeugführer eingegeben werden können. Zur Bedienung der Bedienmaske kann eine von der Anzeigefläche getrennte Eingabeeinrichtung - wie z.B. ein Tastenfeld - vorgesehen sein und/oder die Anzeigefläche kann als Eingabeeinrichtung dienen, indem die Anzeigeeinheit als berührungsempfindliches Display (auch "Touch-Screen" genannt) ausgebildet ist. Dem Triebfahrzeugführer kann zu einem bestimmten Zeitpunkt mittels der zentralen Anzeigeeinheit die Bedienmaske oder die Bedienmasken dargestellt werden, die er für seine Bedienung und Arbeit zu diesem Zeitpunkt, insbesondere für die aktuell eingetretene oder bevorstehende Betriebsphase des Schienenfahrzeugs, und zur Durchführung einer für diese Betriebsphase spezifischen Applikation benötigt.

In einer vorteilhaften Weiterbildung der Erfindung wird vorgeschlagen, dass ein Regulierungsvorgang der Steuereinheit das Prüfen zumindest einer Bedingung und eine Informationsbehandlung in Abhängigkeit eines Prüfergebnisses umfasst, die Steuereinheit eine Schnittstelle aufweist, über welche sie im Betrieb auf eine Datenbank zugreift, in welcher subsystembezogenen Informationen jeweils eine Prioritätsstufe zugeordnet ist, und eine Bedingung des Regulierungsvorgangs das Vorliegen einer Prioritätsstufe betrifft. Hierdurch kann für die Anzeigeeinheit ein dynamischer Informationsgehalt erreicht werden, wobei eine effiziente und weitestgehend konfliktlose Anzeige von Informationen unterschiedlicher Betriebsmittelsubsysteme erzielt werden kann.

Ein vorteilhaft automatisierter dynamischer Informationsgehalt für die Anzeigeeinheit kann in diesem Zusammenhang erreicht werden, wenn die Steuereinheit eine Schnittstelle aufweist, über welche sie im Betrieb auf eine Datenbank zugreift, in welcher Prioritätsstufen jeweils ein Behandlungsvorgang für eine Behandlung der subsystembezogenen Informationen zugeordnet ist. Ein Behandlungsvorgang kann dabei vorteilhafterweise, abhängig von einer zugeordneten Prioritätsstufe ein automatisches Anzeigen der Informationen mittels der Anzeigeeinheit, eine Zurverfügungstellung der Informationen mit angezeigter Benachrichtigung mittels der Anzeigeeinheit oder eine passive Zurverfügungstellung sein. Bei einem automatischen Anzeigen der Informationen erfolgt ein Einblenden der Informationen, ohne dass ein aktiver Vorgang des Triebfahrzeugführers notwendig ist. Im zweiten genannten Fall erfolgt ein automatisches Einblenden der Benachrichtigung, ohne dass ein aktiver Vorgang des Triebfahrzeugführers notwendig ist, wobei für einen Abruf der Informationen eine aktive Handlung des Triebfahrzeugführers notwendig ist. Bei einer "passiven" Zurverfügungstellung liegen die Informationen für einen aktiven Abruf durch den Triebfahrzeugführer vor, wobei keine Benachrichtigung erfolgt.

Die Prioritätsstufen, die den subsystembezogenen Informationen zugeordnet sind, können fest zugeordnet sein, wobei sich die jeweils zumindest einer bestimmten Information zugeordneten Prioritätsstufen nicht ändern. Es ist jedoch auch denkbar, dass - für zumindest einen Teil der zugeordneten Prioritätsstufen - sich die Prioritätsstufen dieses Teils mit der Zeit ändern. Eine Bedingung eines Regulierungsvorgangs der Steuereinheit zur Änderung der Prioritätsstufe kann dabei insbesondere das Eintreten eines Betriebsereignisses betreffen und die entsprechende Informationsbehandlung entspricht dann einer ereignisgetriggerten Änderung der Prioritätsstufe. Sind die Prioritätsstufen selbst jeweils einem Behandlungsvorgang für eine Behandlung der subsystembezogenen Informationen zugeordnet, stellt dies eine vorteilhafte Möglichkeit dar, eine ereignisgetriggerte Anzeige von subsystembezogenen Informationen zu erreichen.

Außerdem wird vorgeschlagen, dass sicherheitsbezogenen Informationen gegenüber weiteren Informationen eine höhere Prioritätsstufe zugeordnet ist. Unter "sicherheitsbezogenen Informationen" sollen Informationen verstanden werden, deren Behandlung gemäß Anforderungen der sogenannten "Safety" zu erfolgen haben. Insbesondere zielen die Safety-Anforderungen auf den Personenschutz ab. Unter "Safety-Anforderungen" sollen insbesondere Anforderungen verstanden werden, die in den Normen EN 50128, 50159, 50126 und/oder 50129 definiert sind. Durch die Zuteilung unterschiedlicher Prioritätsstufen hinsichtlich Sicherheitsaspekte kann im Regulieren des dynamischen Informationsgehalts durch die Steuereinheit eine differenzierte Behandlung von sicherheitsbezogenen Informationen einerseits und auf Komfortsysteme bezogenen Informationen andererseits erreicht werden.

Die Erfindung betrifft ferner ein Verfahren zur Ausgabe von Informationen an einen Führer eines Schienenfahrzeugs, welches mehrere Betriebsmittelsubsysteme aufweist, bei welchem Informationen mittels einer Anzeigeeinheit angezeigt werden.

Es wird vorgeschlagen, dass ein auf mehrere Betriebsmittelsubsysteme bezogener, dynamischer Informationsgehalt für die Anzeigeeinheit reguliert wird, der dynamische Informationsgehalt mittels der Anzeigeeinheit angezeigt wird und beim Regulieren des Informationsgehalts zumindest eine Bedingung geprüft wird und eine Informationsbehandlung in Abhängigkeit eines Prüfergebnisses stattfindet, wobei die zumindest eine Bedingung das Eintreten eines Betriebsereignisses betrifft und die Informationsbehandlung eine Anzeige von Informationen in Abhängigkeit eines Prüfergebnisses umfasst. Zu den vorteilhaften Wirkungen des erfindungsgemäßen Verfahrens wird auf die obigen Ausführungen zum erfindungsgemäßen Schienenfahrzeug verwiesen.

Es werden Ausführungsbeispiele der Erfindung anhand der Zeichnungen näher erläutert. Es zeigen:
- Figur 1:: ein Schienenfahrzeug in einer schematischen Seitenansicht,
- Figur 2:: eine Detailansicht eines Führerraums mit einem Bedienpult,
- Figur 3:: das Bedienpult mit einer Anzeigevorrichtung in einer Ansicht von oben,
- Figur 4:: die Anzeigevorrichtung mit einer Steuereinheit und Betriebsmittelsubsysteme des Schienenfahrzeugs,
- Figur 5:: eine Datenbusstruktur des Schienenfahrzeugs und
- Figur 6:: eine Bedienmaske.

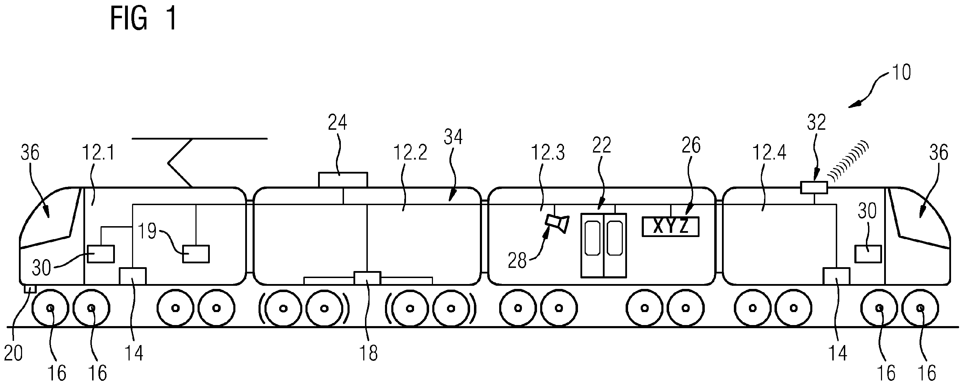

Figur 1 zeigt ein Schienenfahrzeug 10 in einer schematischen Seitenansicht. Das Schienenfahrzeug 10 ist als ein Verband von mehreren Wagen 12 ausgebildet, die miteinander mechanisch gekoppelt sind und eine Zugeinheit bilden. In der betrachteten Ausführung ist das Schienenfahrzeug 10 als sogenannter Triebzug ausgebildet. Hierzu ist zumindest einer der Wagen 12 des Verbands mit einer Antriebseinheit 14 zum Antreiben einer Antriebsachse 16 versehen. Die Antriebseinheit 14 weist eine Leistungsversorgungseinheit auf, welche insbesondere mittels einer Leistungselektronik eine elektrische Leistung für einen Elektromotor (nicht gezeigt) erzeugt. In einer weiteren Ausführung ist denkbar, dass das Schienenfahrzeug 10 als einzelner Triebwagen ausgebildet ist. Außerdem kann das Schienenfahrzeug 10 als Lokomotive ausgebildet sein.

Das Schienenfahrzeug 10 weist bekannterweise eine Anzahl von Betriebsmitteln auf, die einen Betrieb des Fahrzeugs 10 ermöglichen. Ein Satz von funktional zusammenhängenden Betriebsmitteln, die einer bestimmten Funktionalität zugeordnet sind, wird auch "Betriebsmittelsubsystem" (in diesem Text auch lediglich "Subsystem") genannt. Es sind in Figur 1 Betriebsmittel der folgenden Betriebsmittelsubsysteme beispielhaft dargestellt: Komponenten der Antriebseinheit (Subsystem 14), einer Bremseinrichtung (Subsystem 18, beispielhaft und schematisch im Wagen 12.2 dargestellt), einer Fahrzeugsteuerung (Subsystem 19), einer Zugsicherung (Subsystem 20), einer Türeinheit (Subsystem 22, beispielhaft und schematisch im Wagen 12.3 dargestellt), einer Klimatisierungseinrichtung (Subsystem 24), eines Fahrgastinformationssystems (Subsystem 26), einer Videoüberwachungseinheit (Subsystem 28), einer elektronischen Buchfahrplaneinheit mit Fahrerassistenzfunktion (Subsystem 30) und einer Zug-Boden-Kommunikationseinheit (Subsystem 32). Betriebsmittel des Fahrzeugs 10 können allgemein als Steuereinheit, Sensoreinheit und/oder Aktorikeinheit ausgebildet sein. Die Betriebsmittel, die im Schienenfahrzeug 10 installiert und daher dauerhaft an der Fahrzeugstruktur gebunden sind, sind miteinander vernetzt und dabei Bestandteile eines in Figur 1 stark schematisch dargestellten Datennetzwerks 34.

Außerdem ist das Schienenfahrzeug 10 in jedem Kopfwagen jeweils mit einem Führerstand 36 ausgestattet, welcher unten beschrieben wird.

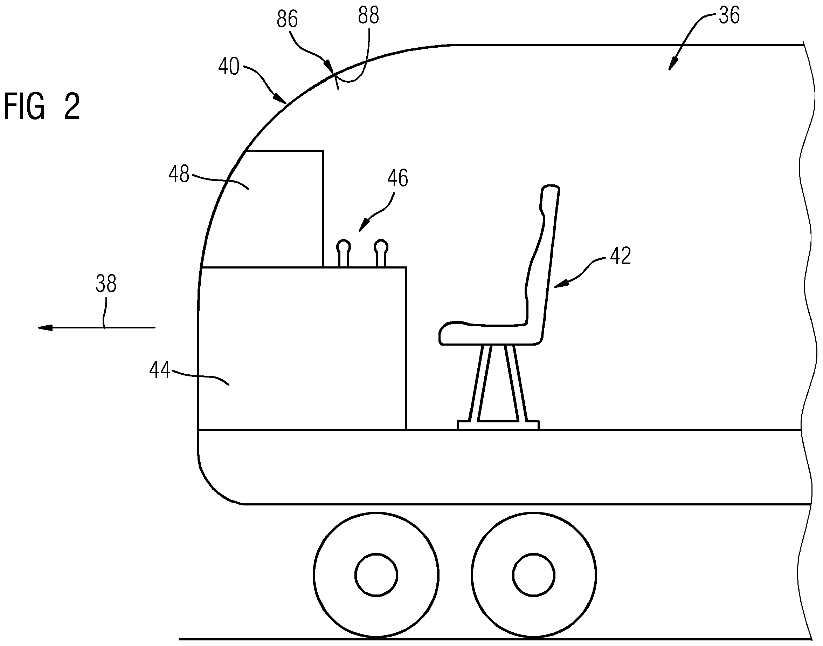

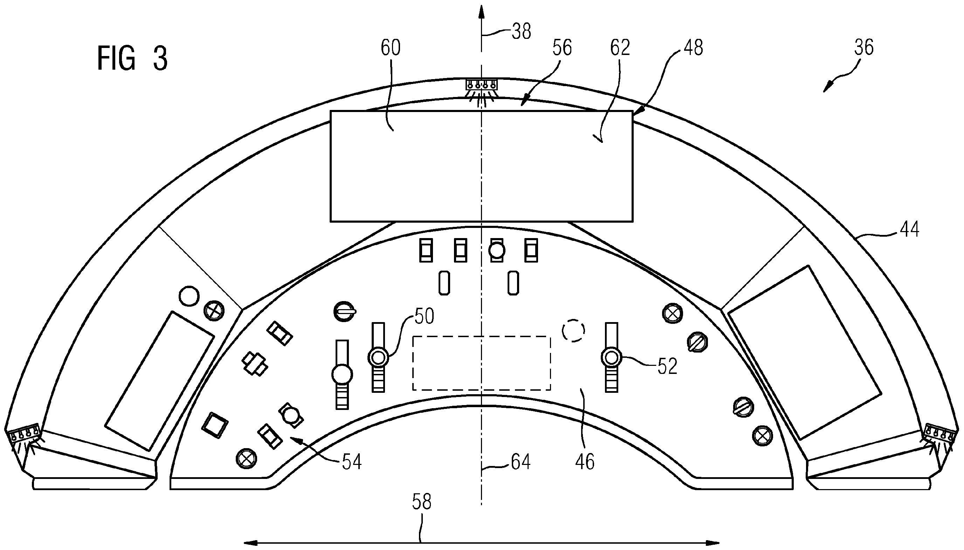

Die Figuren 2 und 3 zeigen den Führerstand 36 in einer schematischen Darstellung. Er ist in Fahrtrichtung 38 betrachtet hinter der als Windschutzscheibe ausgebildeten Fahrzeugsichtscheibe 40 des jeweiligen Kopfwagens angeordnet. Er ist mit einer Sitzmöglichkeit 42 für den Fahrzeugführer und einem Bedienpult 44 ausgestattet, welches als Trägereinheit für eine Führerstandbetätigungseinrichtung 46 und eine Führerstandanzeigevorrichtung 48 dient. Die Führerstandbetätigungseinrichtung 46 weist bekannterweise einen Satz von Bedienmitteln auf (siehe Figur 3), über welche der Fahrzeugführer verschiedene Steuerbefehle eingeben kann. Typische Steuerbefehle sind die Eingabe einer Traktionsstufe mittels eines ersten, als Bedienhebel ausgebildeten Bedienmittels 50 und die Eingabe einer Bremsstufe mittels eines weiteren, als Bedienhebel ausgebildeten Bedienmittels 52. Über weitere, als Taster ausgebildete Bedienmittel 54 kann der Fahrzeugführer einen Quittiervorgang auf Aufforderung der Zugsicherung (z.B. PZB-Quittierung) erledigen. Das Bedienpult 44 ist mit weiteren, im Einzelnen nicht näher beschriebenen Bedienmitteln ausgestattet.

Die Führerstandanzeigevorrichtung 48 weist eine zentrale Anzeigeeinheit 56 auf, die eine bezüglich der Richtung 58 der Breite des Schienenfahrzeugs 10 mittig angeordnete Displayeinheit 60 aufweist. Die Displayeinheit 60 ist - bezüglich der Richtung 58 der Breite des Schienenfahrzeugs 10 - zwischen den Bedienmitteln 50, 52 für Traktion und Bremse angeordnet, wobei die Displayeinheit 60 relativ zu den Bedienmitteln 50, 52 in Fahrtrichtung 38 versetzt ist. Die Displayeinheit 60 bildet eine zusammenhängende Anzeigefläche 62, die sich im Blickfeld eines sitzenden, in Fahrtrichtung 38 schauenden Fahrzeugführers befindet. Die Anzeigefläche 62 befindet sich hierbei auf der Fahrzeugmittelebene 64, die sich in Fahrtrichtung 38 - oder Längsrichtung des Schienenfahrzeugs 10 - erstreckt bzw. die Anzeigefläche 62 wird von der Fahrzeugmittelebene 64 geschnitten. Die Anzeigefläche 62 ist demnach im Bedienpult 44 mittig angeordnet.

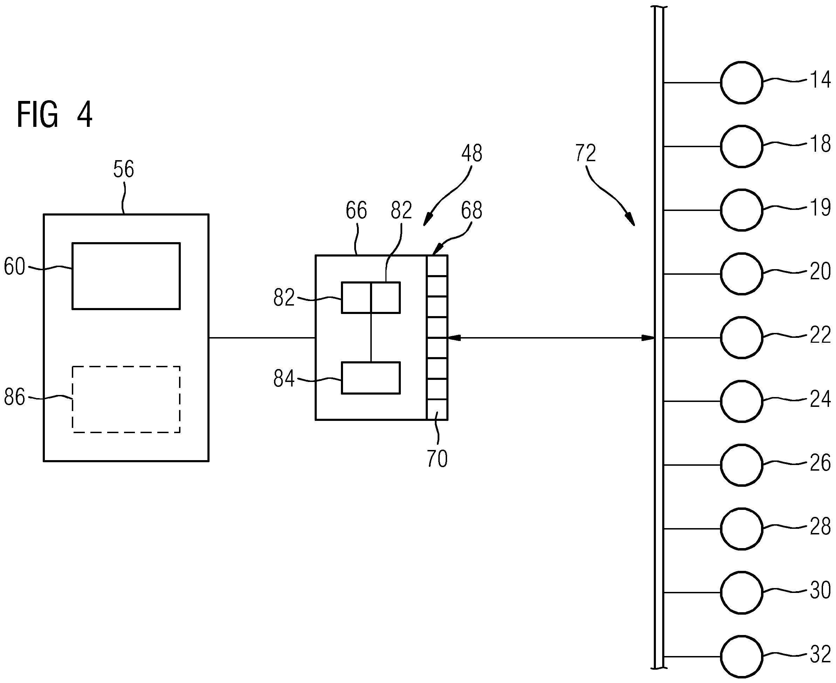

Figur 4 zeigt schematisch eine Schaltung des Schienenfahrzeugs 10. Es sind schematisch die oben beschriebenen Betriebsmittelsubsysteme 14, 18, 19 sowie 20 bis 32 dargestellt. Es ist des Weiteren die Führerstandanzeigevorrichtung 48 gezeigt, welche die Anzeigeeinheit 56 mit der Displayeinheit 60 und eine Steuereinheit 66 zur Steuerung der Anzeigeeinheit 56 aufweist. Die Steuereinheit 66 steht mit der Anzeigeeinheit 56 steuerungstechnisch in Wirkverbindung. Sie ist außerdem über eine Schnittstelleneinrichtung 68 mit den oben beschriebenen Betriebsmittelsubsystemen datentechnisch verbunden. Hierzu weist sie einen Satz von Schnittstellen 70 auf, die jeweils einem unterschiedlichen Betriebsmittelsubsystem zugeordnet sind. Die Schnittstellen 70 können dabei physikalischen Anschlussmöglichkeiten, wie z.B. Steckmöglichkeiten, und/oder sie können logischen Anschlüssen entsprechen, wie z.B. in der Form von logischen Ports. In der letztgenannten, bevorzugten Möglichkeit ist die Steuereinheit 66 an eine Datenbusstruktur 72 angeschlossen, durch welche die Betriebsmittelsubsysteme miteinander vernetzt sind.

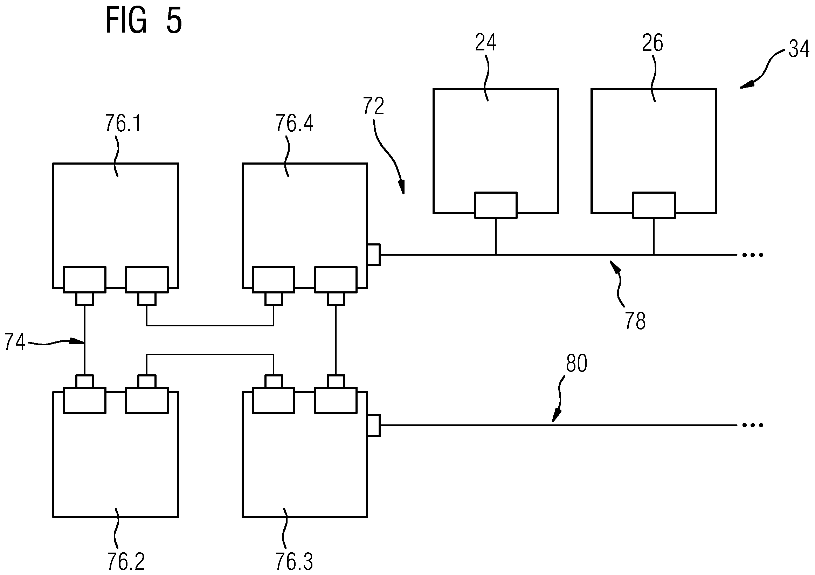

Die Datenbusstruktur 72 ist in Figur 4 stark schematisch gezeigt. Eine beispielhafte Ausführung der Datenbusstruktur 72 ist in Figur 5 gezeigt. Die Datenbusstruktur 72 weist einen Ring 74 auf, welcher Steuergeräte 76.1 bis 76.4, insbesondere speicherprogrammierbare Steuerungen miteinander verbindet. Der Ring 74 basiert insbesondere auf der Ethernet-Technologie und kann z.B. als Profinet®-Ring ausgebildet sein. In einer alternativen Ausführung kann die Datenbusstruktur 72 einen CAN-Bus aufweisen. An den Ring 74 sind beispielhaft dargestellte Betriebsmittelsubsysteme 24, 26 über einen mit dem Ring 74 verbundenen Datenbus 78 der Datenbusstruktur 72 angeschlossen. Der Bus 78 kann z.B. dem bekannten MVB-Bus entsprechen. An den Ring 74 kann ferner ein sich entlang des gesamten Verbands von Wagen 12 erstreckender Zugbus 80 der Datenbusstruktur 72, wie z.B. ein WTB-Bus oder ETB-Bus angeschlossen sein.

Die Steuereinheit 66 ist - wie unten im Einzelnen dargelegt - dazu vorgesehen, einen auf mehrere Betriebsmittelsubsysteme bezogenen, dynamischen Informationsgehalt für die Anzeigeeinheit 56 zu regulieren.

Hierzu weist die Steuereinheit 66 eine Recheneinheit 82 mit zumindest einem Prozessor und eine Speichereinheit 84 auf, in welcher Softwaremodule gespeichert sind. In zumindest einem Softwaremodul ist ein Regulierungsvorgang programmiert, bei welchem folgende Verfahrensschritte ausgeführt werden:
- Prüfschritt, in welchem das Erfüllen zumindest einer Bedingung geprüft wird und
- Informationsbehandlung in Abhängigkeit eines Prüfergebnisses.

Es wird durch die Steuereinheit 66 eine Informationsbehandlung gesteuert, die gemäß Regeln erfolgt, welchen die Vorgabe von Bedingungen zugrunde liegt. Die Ausgabe von Informationen mittels der Anzeigeeinheit 56 erfolgt demnach dynamisch in Abhängigkeit von Parametern, die von der Steuereinheit 66 ausgewertet werden.

Insbesondere umfasst die Informationsbehandlung eine ereignisgetriggerte Anzeige von Informationen, indem eine Bedingung des Regulierungsvorgangs das Eintreten eines Betriebsereignisses betrifft. Hierbei umfassen die Regeln die Verknüpfung von Betriebsereignissen zu einem oder mehreren Anzeigevorgängen, die ausgeführt werden, wenn ein bestimmtes Betriebsereignis durch die Steuereinheit 66 als eingetreten erkannt wird.

Der ereignisgetriggerten Steuerung der Anzeigeeinheit 56 liegt eine Zuordnungstabelle einer Datenbank zugrunde, die in der Speichereinheit 84 gespeichert ist und unten dargestellt ist. In dieser Zuordnungstabelle ist vordefinierten Betriebsereignissen jeweils zumindest eine subsystembezogene Information zugeordnet:

| Betriebsereignis | Information |
|---|---|
| | |
| Fahrplanmäßiges Halten an einer Haltestelle | Bilder des Subsystems 28 - Überwachung Fahrgastraum |
| Fahrplanmäßiges Halten an einer Haltestelle | Bedienmaske "technischer Diagnosedisplay" des Subsystems 19 - Freigabe der Türen |
| Fahrphase | Bilder des Subsystems 28 - Frontkamera |
| Fahrphase | Fahrempfehlungen Subsystem 30 |
| Betätigung einer Notruftaste durch Fahrgast | Bilder des Subsystems 28 - Kamera, die der Notrufstation zugeordnet ist. |
| Fahrtantritt | Bedienmaske des Subsystems 19 |
| Anfahrphase Haltestelle | Bedienfeld des Subsystems 26 - Auswahl und Tätigung von Durchsagen |
| ... | ... |

Das Erkennen des Eintretens eines Betriebsereignisses kann selbst durch die Prüfung mehrerer Bedingungen erfolgen. So kann beispielsweise das Betriebsereignis "Fahrplanmäßiges Halten an einer Haltestelle" durch die Bedingungen "Sinken der Fahrzeuggeschwindigkeit unter einem vorbestimmten Schwellwert" (z.B. 5 km/h) und "bevorstehender, fahrplanmäßiger Halt an der Haltestelle", welcher dem Subsystem 30 entnommen werden kann, erfasst werden.

Der Anzeigevorgang, welcher durch das Erfüllen der Bedingung "Eintreten des Betriebsereignisses X" ausgelöst wird, umfasst dann die Anzeige der diesem Betriebsereignis X gemäß der Datenbank zugeordneten Informationen.

Dieser Anzeigevorgang umfasst insbesondere ein automatisches Einblenden der zugeordneten Informationen in der Displayeinheit 60. So werden beispielsweise beim Vorliegen des Betriebsereignisses "Fahrplanmäßiges Halten an einer Haltestelle" die Bilder der Videoüberwachungseinheit (Subsystem 28) im Bereich der Türen automatisch eingeblendet. Während des Aufenthalts des Schienenfahrzeugs 10 an der Haltestelle bleiben die Bilder der Videokameras eingeblendet. In der Abfahrtphase wird als Bedingung das Überschreiten des oben beschriebenen Geschwindigkeitsschwellwerts von der Steuereinheit 66 geprüft. Wird das Betriebsereignis "Fahrplanmäßiges Halten an einer Haltestelle" dadurch als nicht mehr aktuell vorliegend erkannt, wird ein automatisches Ausblenden der Kamerabilder in der Displayeinheit 60 durch die Steuereinheit 66 ausgelöst.

Außerdem wird beim Vorliegen des Betriebsereignisses "Fahrplanmäßiges Halten an einer Haltestelle" eine Bedienmaske des Subsystems 19 automatisch eingeblendet, über welche Freigabe und Sperrung von Türen vom Triebfahrzeugführer ausgeführt werden können. Diese Bedienmaske entspricht dem "technischen Diagnosedisplay" vom Stand der Technik. Liegt das Betriebsereignis nicht mehr vor, wird die Bedienmaske ausgeblendet.

Beim Betriebsereignis "Fahrphase" erfolgt ein automatisches Einblenden der Bildinformationen des Subsystems 28 ("Videoüberwachungseinheit"), insbesondere von Frontkameras, und einer Markierung von Hindernissen, die sich im Fahrweg befinden. Diese Anzeigevorgänge können mit weiteren Bedingungen verknüpft werden, die auf eine Witterungsbedingung und/oder ein Lichtverhältnis bezogen sind. Beim Betriebsereignis "Anfahrphase Haltestelle" erfolgt ein automatisches Ausblenden dieser Bildinformationen.

Beim Betriebsereignis "Fahrphase" erfolgt ein automatisches Einblenden von Fahrempfehlungen eines Fahrerassistenzsystems des Subsystems 30 ("elektronische Buchfahrplaneinheit"). Beim Verlassen dieses Betriebsereignisses, z.B. indem sich das Schienenfahrzeug 10 in der Betriebsphase "Anfahrphase Haltestelle" befindet, erfolgt ein automatisches Ausblenden dieser Informationen.

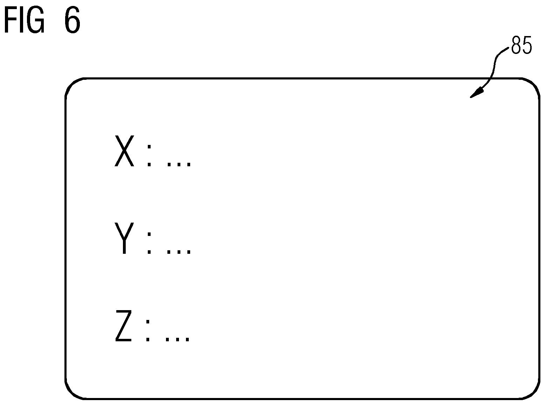

Beim Betriebsereignis "Fahrtantritt" erfolgt ein automatisches Einblenden der oben genannten Bedienmaske "technischer Diagnosedisplay" des Subsystems 19 ("Fahrzeugsteuerung"), durch welche der Triebfahrzeugführer zur Eingabe einer Fahrzeugnummer und weiterer Parameter aufgefordert wird und mittels welcher er diese Eingabe erledigen kann. Eine beispielhafte Ausführung einer derartigen Bedienmaske 85 ist in Figur 6 gezeigt.

Die oben gezeigte Zuordnungstabelle ist vorteilhafterweise vom Endbenutzer konfigurierbar, wobei neben nicht änderbare Einstellungen weitere Verknüpfungen zwischen Betriebsereignissen und bestimmten Informationen der Subsysteme festgelegt werden können.

Eine Bedingung für einen Regulierungsvorgang der Steuereinheit 66 kann ferner das Vorliegen einer Prioritätsstufe sein, die bestimmten subsystembezogenen Informationen zugeordnet ist.

Hierzu umfasst die in der Speichereinheit 84 gespeicherte Datenbank eine Zuordnungstabelle, die unten dargestellt ist:

| Information | Prioritätsstufe |
|---|---|
| | |
| Meldungen des Subsystems 14 | Hoch |
| Meldungen des Subsystems 18 | Hoch |
| Meldungen des Subsystems 24 | Mittel |
| Meldungen des Subsystems 26 | Niedrig |
| Meldungen des Subsystems 30 | Niedrig |
| ... | ... |

Ein Prüfschritt auf der Basis der Prioritätsstufe ist insbesondere für Informationen von Vorteil, für welche keine direkte, insbesondere in der Datenbank festgelegte Zuordnung zu einem bestimmten Betriebsereignis vorliegt. Dies betrifft überwiegend von den Subsystemen erzeugte Meldungen über den Zustand von Betriebsmitteln, die *per se* jederzeit - d.h. in jeder Betriebsphase - erzeugt werden können.

In einem Beispiel wird während des Aufenthalts des Schienenfahrzeugs 10 an der Haltestelle eine Meldung einer Diagnoseeinrichtung erzeugt. Diese ist Bestandteil des Subsystems 24 ("Klimatisierungseinrichtung") und meldet, dass eine Lüftungseinheit im Subsystem defekt ist. Dieser Information ist die Prioritätsstufe "mittel" zugeordnet. Die Steuereinheit 66 prüft das Vorhandensein einer bestimmten Prioritätsstufe für diese Information und ordnet eine bestimmte Informationsbehandlung zu.

Hierzu weist die Datenbank eine Zuordnungstabelle auf, die unten dargestellt ist:

| Prioritätsstufe | Behandlung der Informationen |
|---|---|
| | |
| Hoch | Automatisches Anzeigen mittels der Anzeigeeinheit 56 |
| Mittel | Zurverfügungstellung der Informationen mit automatischer Benachrichtigung mittels der Anzeigeeinheit 56 |
| Niedrig | Zurverfügungstellung der Informationen ohne automatische Benachrichtigung |

Der in der zweiten Zeile angegebene Behandlungsvorgang umfasst das automatische Einblenden einer Benachrichtigung für den Triebfahrzeugführer, die ihn darüber informiert, dass die Information abrufbar ist. Das Abrufen selbst kann durch eine aktive Bedienung eines Eingabefelds durch den Triebfahrzeugführer erfolgen. Es wird demnach dem Triebfahrzeugführer überlassen, ob der Inhalt der Meldung mittels der Anzeigeeinheit 56 angezeigt wird.

In einem weiteren Beispiel werden während einer Fahrphase des Schienenfahrzeugs 10 Meldungen von unterschiedlichen Diagnoseeinrichtungen erzeugt. Eine erste Diagnoseeinrichtung ist Bestandteil des Subsystems 14 und einem Antriebssteuergerät zugeordnet. Diese erzeugt die Meldung "Fahrmotor 1 - Wagen 29 ausgefallen". Die weitere Meldung entspricht der oben beschriebenen Meldung über den Ausfall einer Lüftungseinheit im Subsystem 24. Die Steuereinheit 66 wertet die jeweils zugeordnete Prioritätsstufe aus und trifft darauf basierend eine Entscheidung über den auszulösenden Anzeigevorgang. Der ersten Meldung ist die Prioritätsstufe "hoch" zugeordnet, sodass die Steuereinheit 66 ein automatisches Einblenden der Information über den Ausfall des Fahrmotors auslöst. Bezüglich der Meldung des Subsystems 24, welcher die Prioritätsstufe "mittel" zugeordnet ist, wird wie oben beschrieben eine Benachrichtigung eingeblendet.

Subsystembezogenen Informationen, die wie oben beschrieben zumindest einem Betriebsereignis zugeordnet sind, kann auch jeweils eine Prioritätsstufe zugeordnet sein. In einem weiteren Beispiel erfolgt wie oben beschrieben während einer Fahrphase des Schienenfahrzeugs 10 eine Anzeige von Fahrempfehlungen des Fahrerassistenzsystems. Wird die oben genannte Meldung bezüglich des Ausfalls des Fahrmotors erzeugt, erfolgt ein Überblenden der Fahrempfehlungen durch diese Meldung. Dies wird dadurch erreicht, dass der vom Subsystem 14 ("Antriebseinheit") erzeugten Meldung eine höhere Prioritätsstufe zugeordnet ist als die Fahrempfehlungen des Subsystems 30 ("elektronische Buchfahrplaneinheit"). Die Meldung bezüglich des Ausfalls des Fahrmotors soll gemäß den oben beschriebenen Regeln jedoch keine angezeigte Information überblenden, der ebenfalls der Prioritätsstufe "hoch" zugeordnet ist. Es können demnach nur Informationen überblendet werden, die eine niedrigere Prioritätsstufe aufweisen.

Die höchste Prioritätsstufe wird unter den Informationen, die im Schienenfahrzeug 10 und seinem Umfeld kommuniziert werden, den Informationen zugeordnet, die sicherheitsbezogen sind. In der fachmännischen Sprache werden diese für den Personenschutz relevanten Informationen auch "Safety-relevante" Informationen genannt. Es handelt sich um Informationen bzw. Daten, deren Kommunikation normierten Anforderungen unterliegt. Insbesondere ist eine "Safety-konforme" Datenübertragung in den Normen EN 50128, 50159, 50126 und/oder 50129 definiert. Durch die Zuordnung der höchsten Prioritätsstufe zu Safety-relevanten Informationen erfolgt nach Auswertung durch die Steuereinheit 66 ein automatisches Einblenden der Informationen in der Anzeigeeinheit 60. Da die von der Steuereinheit 66 ausgelösten Anzeigevorgänge bezüglich Safetyrelevanter Informationen auch einem Kommunikationsprozess von Safety-relevanten Informationen entsprechen, unterliegen sie ebenfalls den oben genannten Anforderungen. Demnach muss die Steuereinheit 66 sicher ausgelegt sein. Insbesondere ist sie redundant ausgeführt. Dies dann dadurch erreicht werden, dass sie wie in Figur 4 angedeutet mit zwei Recheneinheiten - z.B. zwei Prozessorkernen - ausgestattet ist, wobei die Steuervorgänge der Steuereinheit 66 diversitär redundant sind. Beispielsweise werden die Steuervorgänge jeweils mit zwei verschiedenen Algorithmen programmiert.

Im oben betrachteten Ausführungsbeispiel weist die Anzeigeeinheit 56 die als Bildschirm ausgebildete Displayeinheit 60 auf, wobei Anzeigevorgänge mittels der Displayeinheit 60 durchgeführt werden. Alternativ oder zusätzlich weist die Anzeigeeinheit 56 ein Anzeigemittel 86 auf, bei welchem die von der Windschutzscheibe gebildete Fahrzeugsichtscheibe 40 eine Anzeigefläche 88 bildet. Diese optionale Ausführung der Anzeigeeinheit 56 mit dem Anzeigemittel 86 - in der fachmännischen Sprache auch "Headup-Display" genannt - ist in Figur 4 gestrichelt dargestellt (siehe auch Figur 1).

## Patentansprüche

1. Schienenfahrzeug mit einem Satz von Betriebsmittelsubsystemen (14, 18, 19, 20 - 32) und einer Führerstandanzeigevorrichtung (48) zur Anzeige von Informationen an den Fahrzeugführer, die zumindest eine zentrale Anzeigeeinheit (56) aufweist, wobei
- die Führerstandanzeigevorrichtung (48) eine der Anzeigeeinheit (56) vorgeschaltete Steuereinheit (66) aufweist,
o die eine Schnittstelleneinrichtung (68) mit einem Satz von Schnittstellen (70) aufweist, die jeweils einem unterschiedlichen Betriebsmittelsubsystem (14, 18, 19, 20-32) zugeordnet sind, und
o die dazu vorgesehen ist, einen auf mehrere Betriebsmittelsubsysteme (14, 18, 19, 20 - 32) bezogenen und bezüglich einer Informationsart mit der Zeit veränderlichen Informationsgehalt für die Anzeigeeinheit (56) zu regulieren, wobei das Regulieren ein Steuern, welches gemäß einer vordefinierten Regel erfolgt, ist, und
- ein Regulierungsvorgang der Steuereinheit (66) das Prüfen zumindest einer Bedingung und eine Informationsbehandlung in Abhängigkeit eines Prüfergebnisses, welches ein Ergebnis des Prüfens der zumindest einen Bedingung ist, umfasst, wobei die Bedingung des Regulierungsvorgangs das Eintreten eines Betriebsereignisses betrifft und die Informationsbehandlung eine Anzeige von Informationen in Abhängigkeit eines Prüfergebnisses umfasst,
**dadurch gekennzeichnet, dass** das Schienenfahrzeug eine Datenbank umfasst, in welcher Betriebsereignissen jeweils zumindest eine subsystembezogene Information zugeordnet ist, und dass die Steuereinheit (66) eine Schnittstelle aufweist, über welche sie im Betrieb auf die Datenbank zugreift.

2. Schienenfahrzeug nach Anspruch 1,
**dadurch gekennzeichnet, dass**
die Betriebsmittelsubsysteme (20 - 32) zur Gruppe von Systemen gehören, die von einer Zugsicherung (20), einer Türeinheit (22), einer Klimatisierungseinrichtung (24), einem Fahrgastinformationssystem (26), einer Videoüberwachungseinheit (28), einer elektronischen Buchfahrplaneinheit mit Fahrerassistenzfunktion (30) und einer Zug-Boden-Kommunikationseinheit (32) gebildet ist.

3. Schienenfahrzeug nach Anspruch 1 oder 2,
**dadurch gekennzeichnet, dass**
das Betriebsereignis ein Ereignis in der von einem fahrplanmäßigen Halten an einer Haltestelle, einer Fahrphase, einem Fahrtantritt, einer Anfahrphase einer Haltestelle und einer Betätigung einer Notruftaste durch einen Fahrgast gebildeten Gruppe ist.

4. Schienenfahrzeug nach einem der vorhergehenden Ansprüche,
**dadurch gekennzeichnet, dass**
die Informationsbehandlung die Anzeige einer subsystembezogenen Bedienmaske (85) umfasst.

5. Schienenfahrzeug nach einem der vorhergehenden Ansprüche,
**dadurch gekennzeichnet, dass**
ein Regulierungsvorgang der Steuereinheit (66) das Prüfen zumindest einer Bedingung und eine Informationsbehandlung in Abhängigkeit eines Prüfergebnisses umfasst, die Steuereinheit (66) eine Schnittstelle aufweist, über welche sie im Betrieb auf eine Datenbank zugreift, in welcher subsystembezogenen Informationen jeweils eine Prioritätsstufe zugeordnet ist, und eine Bedingung des Regulierungsvorgangs das Vorliegen einer Prioritätsstufe betrifft.

6. Schienenfahrzeug nach Anspruch 5,
**dadurch gekennzeichnet, dass**
die Steuereinheit (66) eine Schnittstelle aufweist, über welche sie im Betrieb auf eine Datenbank zugreift, in welcher Prioritätsstufen jeweils ein Behandlungsvorgang für eine Behandlung der subsystembezogenen Informationen zugeordnet ist.

7. Schienenfahrzeug nach Anspruch 6,
**dadurch gekennzeichnet, dass**
ein zugeordneter Behandlungsvorgang abhängig von der Prioritätsstufe ein automatisches Anzeigen der Informationen mittels der Anzeigeeinheit (56), eine Zurverfügungstellung der Informationen mit angezeigter Benachrichtigung mittels der Anzeigeeinheit (56) oder eine passive Zurverfügungstellung, bei welcher die Information für eine aktiven Abruf durch den Triebfahrzeugführer vorliegt, wobei keine Benachrichtigung erfolgt, ist.

8. Schienenfahrzeug nach einem der Ansprüche 5 bis 7,
**dadurch gekennzeichnet, dass**
sicherheitsbezogenen Informationen gegenüber weiteren Informationen eine höhere Prioritätsstufe zugeordnet ist.

9. Schienenfahrzeug nach einem der vorhergehenden Ansprüche,
**dadurch gekennzeichnet, dass**
die Anzeigeeinheit (56) zumindest eine Anzeigefläche (88) aufweist, die von einer Fahrzeugsichtscheibe (40) gebildet ist.

10. Verfahren zur Ausgabe von Informationen an einen Führer eines Schienenfahrzeugs (10), welches mehrere Betriebsmittelsubsysteme (14, 18, 19, 20 - 32) aufweist, bei welchem Informationen mittels einer zentralen Anzeigeeinheit (56) angezeigt werden, wobei
- ein auf mehrere Betriebsmittelsubsysteme (14, 18, 19, 20 - 32) bezogener und bezüglich einer Informationsart mit der Zeit veränderlicher Informationsgehalt für die Anzeigeeinheit (56) mittels einer der Anzeigeeinheit (56) vorgeschalteten Steuereinheit (66) reguliert wird, wobei das Regulieren ein Steuern, welches gemäß einer vordefinierten Regel erfolgt, ist und wobei die Steuereinheit (66) eine Schnittstelleneinrichtung (68) mit einem Satz von Schnittstellen (70) aufweist, die jeweils einem unterschiedlichen Betriebsmittelsubsystem (14, 18, 19, 20-32) zugeordnet sind,
- der dynamische Informationsgehalt mittels der Anzeigeeinheit (56) angezeigt wird,
- beim Regulieren des Informationsgehalts zumindest eine Bedingung geprüft wird und eine Informationsbehandlung in Abhängigkeit eines Prüfergebnisses, welches ein Ergebnis des Prüfens der zumindest einen Bedingung ist, stattfindet, und
- die zumindest eine Bedingung das Eintreten eines Betriebsereignisses betrifft und die Informationsbehandlung eine Anzeige von Informationen in Abhängigkeit eines Prüfergebnisses umfasst,
**dadurch gekennzeichnet, dass** das Schienenfahrzeug eine Datenbank umfasst, in welcher Betriebsereignissen jeweils zumindest eine subsystembezogene Information zugeordnet ist, und dass die Steuereinheit (66) eine Schnittstelle aufweist, über welche sie im Betrieb auf die Datenbank zugreift.

11. Verfahren nach Anspruch 10,
**dadurch gekennzeichnet, dass**
bei der Informationsbehandlung eine subsystembezogene Bedienmaske (85) angezeigt wird.

12. Verfahren nach einem der Ansprüche 10 bis 11,
**dadurch gekennzeichnet, dass**
subsystembezogenen Informationen jeweils eine Prioritätsstufe zugeordnet ist, beim Regulieren des Informationsgehalts zumindest eine Bedingung geprüft wird und eine Informationsbehandlung in Abhängigkeit eines Prüfergebnisses stattfindet und die zumindest eine Bedingung das Vorliegen einer Prioritätsstufe betrifft.

## Claims

1. Rail vehicle with a set of operating means subsystems (14, 18, 19, 20 - 32) and a driver's cab display device (48) for displaying information to the vehicle driver, having at least one central display unit (56), wherein
- the driver's cab display device (48) has a control unit (66) connected upstream of the display unit (56),
• said control unit having an interface device (68) with a set of interfaces (70), which are each assigned to a different operating means subsystem (14, 18, 19, 20 - 32), and
• said control unit being intended to regulate an information content related to a number of operating means subsystems (14, 18, 19, 20 - 32) and changeable over time with respect to a type of information for the display unit (56), wherein the regulation is a control which is carried out according to a predefined rule, and
- a regulation process of the control unit (66) comprises the checking of at least one condition and information handling as a function of the result of a check which is a result of the check of the at least one condition, wherein_the condition of the regulation process involves the occurrence of an operating event and the information handling comprises displaying information as a function of the result of a check,
**characterised in that**
the rail vehicle comprises a database in which at least one item of subsystem-related information is assigned to operating events in each case, and that the control unit (66) has an interface, by way of which it accesses the database during operation.

2. Rail vehicle according to claim 1,
**characterised in that**
the operating means subsystems (20 - 32) belong to the group of systems that is formed by a train protection system (20), a door unit (22), an air conditioning device (24), a passenger information system (26), a video monitoring unit (28), an electronic working timetable unit with driver assistance function (30) and a train-to-track communication unit (32).

3. Rail vehicle according to claim 1 or 2,
**characterised in that**
the operating event is an event in the group formed by a scheduled stop at a station, a journey phase, the start of a journey, a phase of calling at a station and an actuation of an emergency button by a passenger.

4. Rail vehicle according to one of the preceding claims,
**characterised in that**
the information handling includes the display of a subsystem-related operating mask (85).

5. Rail vehicle according to one of the preceding claims,
**characterised in that**
a regulation process of the control unit (66) includes the checking of at least one condition and information handling as a function of the result of a check, the control unit (66) has an interface via which, during operation, it accesses a database in which system-related information is assigned a priority level in each case, and a condition of the regulation process involves the presence of a priority level.

6. Rail vehicle according to claim 5,
**characterised in that**
the control unit (66) has an interface, via which, during operation, it accesses a database in which priority levels are assigned a handling process for handling the subsystem-related information in each case.

7. Rail vehicle according to claim 6,
**characterised in that**
an assigned handling process dependent on the priority level is an automatic display of the information by means of the display unit (56), a making the information available with a displayed notification by means of the display unit (56) or making the information available passively, in which the information is available for an active recall by the railway traction vehicle driver, wherein no notification takes place.

8. Rail vehicle according to one of claims 5 to 7,
**characterised in that**
safety-related information is assigned a higher priority level compared to other information.

9. Rail vehicle according to one of the preceding claims,
**characterised in that**
the display unit (56) has at least one display surface (88), which is formed by a vehicle window (40).

10. Method for output of information to a driver of a rail vehicle (10), which has a number of operating means subsystems (14, 18, 19, 20 - 32), in which information is displayed by means of a central display unit (56), wherein
- an information content related to a number of operating means subsystems (14, 18, 19, 20 - 32) and changeable over time with respect to a type of information is regulated for the display unit (56) by means of a control unit (66) arranged upstream of the display unit (56), wherein the regulation is a control which is carried out according to a predefined rule, and wherein the control unit (66) has an interface device (68) with a set of interfaces (70), which are each assigned to a different operating means subsystem (14, 18, 19, 20 - 32),
- the dynamic information content is displayed by means of the display unit (56),
- during regulation of the information content at least one condition is checked and the information handling takes place as a function of the result of a check which is a result of the check of the at least one condition, and
- the at least one condition involves the occurrence of an operating event and the information handling comprises a display of information as a function of the result of a check, **characterised in that** the rail vehicle comprises a database in which operating events are each assigned at least one item of subsystem-related information, and that the control unit (66) has an interface, by way of which it access the database during operation.

11. Method according to claim 10,
**characterised in that**
a subsystem-related operating mask (85) is displayed during information handling.

12. Method according to one of claims 10 to 11,
**characterised in that**
subsystem-related information is assigned a priority level in each case, during regulation of the information content at least one condition is checked and information handling takes place as a function of the result of the check and the at least one condition involves the presence of a priority level.

## Revendications

1. Véhicule ferroviaire comprenant un jeu de sous-systèmes (14, 18, 19, 20 à 32) de moyens de fonctionnement et un système (48) d'affichage de cabine de conducteur pour donner des informations au conducteur du véhicule, le système ayant au moins une unité (56) centrale d'affichage, dans lequel
- le système d'affichage (48) de cabine de conducteur a, en amont de l'unité (56) d'affichage, une unité (66) de commande,
o qui a un dispositif (68) d'interface ayant un jeu d'interfaces (70) associées chacune à un sous-système (14, 18, 19, 20 à 32) différent de moyens de fonctionnement et
o qui est prévue pour réguler, pour l'unité (56) d'affichage, un contenu d'information se rapportant à plusieurs sous-systèmes (14, 18, 19, 20 à 32) de moyens de fonctionnement et se modifiant avec le temps en ce qui concerne un type d'information, la régulation étant une commande, qui s'effectue suivant une règle définie à l'avance et
- une opération de régulation de l'unité (66) de commande comprend le contrôle d'au moins une condition et un traitement d'information en fonction d'un résultat de contrôle, qui est un résultat du contrôle de la au moins une condition, la condition de l'opération de régulation concernant l'apparition d'un évènement de fonctionnement et le traitement d'information comprenant un affichage d'information en fonction d'un résultat de contrôle,
**caractérisé en ce que** le véhicule ferroviaire comprend une base de données, dans laquelle, respectivement, au moins une information se rapportant à un sous-système est associée à des évènements de fonctionnement et **en ce que** l'unité (66) de commande a une interface, par laquelle elle accède en fonctionnement à la base de données.

2. Véhicule ferroviaire suivant la revendication 1,
**caractérisé en ce que**
les sous-systèmes (20 à 32) de moyens de fonctionnement appartiennent au groupe de systèmes formés par un arrêt automatique des trains (20), une unité (22) de porte, un dispositif (24) de conditionnement d'air, un système (26) d'information des voyageurs, une unité (28) de surveillance vidéo, une unité électronique de livret de marche à fonction (30) d'assistance au conducteur et une unité (32) de communication train-sol.

3. Véhicule ferroviaire suivant la revendication 1 ou 2,
**caractérisé en ce que**
l'événement de fonctionnement est un évènement du groupe formé par un arrêt prévu à l'indicateur à un point d'arrêt, une phase de circulation, une entrée de marche, une phase de démarrage d'un point d'arrêt et un actionnement d'une touche d'appel d'urgence par un passager.

4. Véhicule ferroviaire suivant l'une des revendications précédentes,
**caractérisé en ce que**
le traitement d'information comprend un masque (85) de service se rapportant à un sous-système.

5. Véhicule ferroviaire suivant l'une des revendications précédentes,
**caractérisé en ce que**
une opération de régulation de l'unité (66) de commande comprend le contrôle d'au moins une condition et un traitement d'information en fonction d'un résultat de contrôle, l'unité (66) de commande a une interface, par laquelle, en fonctionnement, elle accède à une base de données, dans laquelle, respectivement, un degré de priorité est associé à des informations se rapportant à un sous-système et une condition de l'opération de régulation concerne la présence d'un degré de priorité.

6. Véhicule ferroviaire suivant la revendication 5,
**caractérisé en ce que**
l'unité (6) de commande a une interface, par laquelle elle accède en fonctionnement à une base de données, dans laquelle, respectivement, une opération de traitement des informations se rapportant aux sous-systèmes est associée à des degrés de priorité.

7. Véhicule ferroviaire suivant la revendication 6,
**caractérisé en ce que**
une opération de traitement associée en fonction du degré de priorité est un affichage automatique des informations au moyen de l'unité (56) d'affichage, une mise à disposition des informations avec instruction affichée au moyen de l'unité (56) d'affichage ou une mise à disposition passive, dans laquelle l'information est présente pour un appel actif par le conducteur du véhicule de traction, aucune instruction n'étant donnée.

8. Véhicule ferroviaire suivant l'une des revendications 5 à 7,
**caractérisé en ce que**
un degré de priorité plus grand est associé à des informations se rapportant à la sécurité par rapport à d'autres informations.

9. Véhicule ferroviaire suivant l'une des revendications précédentes,
**caractérisé en ce que**
l'unité (56) d'affichage a au moins une surface (88) d'affichage formée par une vitre (40) du véhicule.

10. Procédé d'émission d'informations vers un conducteur d'un véhicule (10) ferroviaire, qui a plusieurs sous-systèmes (14, 18, 19, 20 à 32) de moyens de fonctionnement, dans lequel on affiche des informations au moyen d'une unité (56) centrale d'affichage, dans lequel
- on régule, au moyen d'une unité (66) de commande en amont de l'unité (56) d'affichage pour l'unité (56) d'affichage, un contenu d'information se rapportant à plusieurs sous-systèmes (14, 18, 19, 20 à 32) de moyens de fonctionnement et se modifiant en ce qui concerne un type d'information avec le temps, la régulation étant une commande, qui s'effectue suivant une règle définie à l'avance, et l'unité (66) de commande ayant un dispositif (68) d'interface ayant un jeu d'interfaces (70), qui sont associées chacune à un sous-système (14, 18, 19, 20 à 32) différent de moyens de fonctionnement,
- on affiche le contenu d'information dynamique au moyen de l'unité (56) d'affichage,
- lors de la régulation du contenu d'information, on contrôle au moins une condition et un traitement d'information a lieu, en fonction d'un résultat de contrôle, qui est un résultat du contrôle de la au moins une condition, et
- la au moins une condition concerne l'apparition d'un évènement de fonctionnement et le traitement d'information comprend un affichage d'information en fonction d'un résultat de contrôle,
**caractérisé en ce que** le véhicule ferroviaire comprend une base de données, dans laquelle, respectivement, au moins une information se rapportant à un sous-système est associée à des évènements de fonctionnement et **en ce que** l'unité (66) de commande a une interface, par laquelle elle accède en fonctionnement à la base de données.

11. Procédé suivant la revendication 10,
**caractérisé en ce que**
on affiche, dans le traitement d'information, un masque (85) de service se rapportant à un sous-système.

12. Procédé suivant l'une des revendications 10 à 11,
**caractérisé en ce que**
on associe, respectivement, un degré de priorité aux informations se rapportant à un sous-système, on contrôle, lors de la régulation du contenu de l'information, au moins une condition et un traitement d'information a lieu en fonction d'un résultat de contrôle et la au moins une condition concerne la présence d'un degré de priorité.
